# EUROPÄISCHE PATENTSCHRIFT

(11) **EP 1 607 192 B1**
(45) Veröffentlichungstag und Bekanntmachung des Hinweises auf die Patenterteilung: **10.10.2012**
(21) Anmeldenummer: 05010718.4
(22) Anmeldetag: 18.05.2005
(51) Int. Cl.: B25J 9/16

(54) **Verfahren und System zur Verschleissabschätzung von Achsen eines Roboterarmes**
Method and system for estimating the wear of robot arm joints
Méthode et système pour estimer l'usure des articulations d'un bras de robot

(30) Priorität: 15.06.2004 DE 102004028559
(43) Veröffentlichungstag der Anmeldung: 21.12.2005
(73) Patentinhaber: ABB AG, 68309 Mannheim (DE)
(72) Erfinder: Bader, Axel, Dipl.-Ing. (FH), 61169 Friedberg (DE); Hansen, Sven, 61200 Berstadt (DE); Schmidt, Steffen, 73434 Aalen (DE); Henrich, Kim, Dipl.-Ing. (FH), 63683 Gelnhaar (DE)
(74) Vertreter: Miller, Toivo

(56) Entgegenhaltungen:
- EP-A- 1 195 668
- WO-A-96/40558
- DE-A1- 10 120 943
- GB-A- 2 285 700
- JP-A- 2004 020 388
- US-A- 3 882 305
- US-A- 5 587 635
- US-A1- 2003 042 861
- MARTIN K F ET AL: 'Condition monitoring machine tool drives via health indices', [Online] 01 Januar 1992, XP008151872 ISBN: 978-0-08-041275-7 FAULT DETECTION, SUPERVISION AND SAFETY FOR TECHNICAL PROCESSES; [IFAC SYMPOSIA SERIES ; 1992,6], OXFORD [U.A.] : PERGAMON PRESS, 1992, US, PAGE(S) 571 - 576 Gefunden im Internet: <URL:http://www.ecampus.com/fault-detection -supervision-safety/bk/97800804127>
- NAKAMURA H ET AL: 'Estimation of robot's life expectancy based on deterioration model and development of a CAE system' ROBOTICS AND AUTOMATION, 1996. PROCEEDINGS., 1996 IEEE INTERNATIONAL C ONFERENCE ON MINNEAPOLIS, MN, USA 22-28 APRIL 1996, NEW YORK, NY, USA,IEEE, US Bd. 4, 22 April 1996, Seiten 3087 - 3092, XP010163205 ISBN: 978-0-7803-2988-1
- FREYERMUTH B ED - INSTITUTE OF ELECTRICAL AND ELECTRONICS ENGINEERS: 'An approach to model based fault diagnosis of industrial robots' PROCEEDINGS OF THE INTERNATIONAL CONFERENCE ON ROBOTICS AND AUTOMATION SACRAMENTO, APR. 9 - 11, 1991; [PROCEEDINGS OF THE INTERNATIONAL CONFERENCE ON ROBOTICS AND AUTOMATION], LOS ALAMITOS, IEEE COMP. SOC. PRESS, US Bd. CONF. 7, 09 April 1991, Seiten 1350 - 1356, XP010023984 ISBN: 978-0-8186-2163-5

## Beschreibung

Die Erfindung betrifft ein Verfahren und ein System zur Verschleißabschätzung von Achsen eines Roboterarmes eines Industrieroboters.

Allgemein bekannt sind Verfahren zur Verschleißabschätzung von Achsen an Industrierobotern, die auf einer mechanischen Messung des Achsspiels beruhen, und aufgrund der gemessenen Werte einen Achsverschleiß abschätzen. Die Abschätzung wird in der Regel vom Betriebs- oder Servicepersonal vorgenommen, die aufgrund ihrer Erfahrungswerte im Umgang mit den Robotern die gemessenen Werte so interpretieren können, dass zum einen der Verschleißzustand festgestellt wird, zum anderen eine Aussage darüber getroffen werden kann, ob und welche Maßnahmen an den Achsen des Roboters vorgenommen werden müssen.

Aus der US 2003/0042861 A1 ist ein System und Verfahren zur Vorhersage mechanischer Fehler in von Induktionsmotoren angetriebenen Maschinenanlagen. Insbesondere wird hierbei das Auftreten von kleineren mechanischen Störungen in Form von Schwankungen des Antriebsdrehmoments während des Betriebs der Maschinenanlage erfasst. Dies ist nützlich für die zeitliche Planung von Stillstandszeiten und/oder von Wartungsintervallen der Maschinenanlage zu einem frühen Zeitpunkt, bevor die mechanischen Störungen zu einer Außerbetriebnahme der Maschinenanlage führen.

Zu diesem Zweck sieht die Lösung aus der US 2003/0042861 A1 die Fernerfassung der mechanischen Störungen vor, indem der Antriebsmotor als Diagnosewerkzeug dient zur Vorhersage beginnender Fehler und/oder zur Erkennung vorhandener Störungen in der Maschinenanlage.

Das Dokument MARTIN K F ET AL: "Condition monitoring machine tool drives via health indices", FAULT DETECTION, SUPERVISION AND SAFETY FOR TECHNICAL PROCESSES; [IFAC SYMPOSIA SERIES ; 1992,6], OXFORD [U.A.] : PERGAMON PRESS, 1992, US, PAGE(S) 571 - 576, 1. Januar 1992 (1992-01-01), XP008151872, ISBN: 978-0-08-041275-7 betrifft Verfahren und System zur Verschleißermittlung von Werkzeugmaschinenachsen. Dieses Dokument offenbart den Ansatz der Ableitung von "health indices" bei Werkzeugmaschinenachsen, die eine Relation von aktuellen zu nominalen Antriebsstromwerten angeben und einen Maß für den aktuellen Achsverschleiß darstellen.

Ausgehend von diesem Stand der Technik, ist es Aufgabe der Erfindung, ein Verfahren und ein System zur Verschleißermittlung von Achsen eines Roboterarmes eines Industrieroboters anzugeben, bei dem auf möglichst einfache Weise, ein Verschleiß ermittelbar ist.

Diese Aufgabe wird gelöst durch das erfindungsgemäße Verfahren zur Verschleißermittlung von Achsen eines Roboterarmes eines Industrieroboters mit den in Anspruch 1 angegebenen Merkmalen. Zudem wird diese Aufgabe gelöst durch ein System zur Verschleißermittlung von Achsen eines Roboterarmes eines Industrieroboters mit den in Anspruch 10 angegebenen Merkmalen.

Demgemäss weist das erfindungsgemäße Verfahren zur Verschleißermittlung von Achsen eines Roboterarmes eines Industrieroboters folgende Verfahrensschritte auf. Ein Drehmomentenverlauf wird an wenigstens einer Achse während wenigstens eines Arbeitszyklus des Industrieroboters einer Analyse zu Grunde gelegt. Der Drehmomentenverlauf wird auf Drehmomentenverlaufsabschnitte, die ein zuvor festgelegtes Drehmomentenband verlassen, analysiert und durch Bewertung der Häufigkeit und/oder des Kurvenverlaufs der Drehmomentenverlaufsabschnitte ein aktueller Achsverschleiß ermittelt.

Ein Vorteil des erfindungsgemäßen Verfahrens besteht darin, dass lediglich ein Drehmomentenverlauf der zu betrachtenden Achse des Industrieroboters benötigt wird, um einen Achsverschleiß abzuschätzen. Dabei ist es von untergeordneter Bedeutung, ob dieser Drehmomentenverlauf gerade gemessen wird oder von einer früheren Messung, die in einem Datenspeicher gespeichert wurde, ausgelesen wird.

Das vorgeschlagene Verfahren betrachtet insbesondere einen Arbeitszyklus oder mehrere des Industrieroboters. Als Arbeitszyklus kann prinzipiell jeder Zeitabschnitt während eines Bewegungsablaufes des Industrieroboters gewählt werden. Besonders sinnvoll ist es jedoch, als Arbeitszyklus einen Bewegungsablauf des Industrieroboters zu wählen, den dieser ständig wiederholt, so dass alle Bewegungen, alle Aufgaben, sowie alle Belastungen die während eines Wiederholungszyklus von Beginn der Abarbeitung einer Aufgabenstellung bis zum Ende der Abarbeitung der Aufgabenstellung abgearbeitet werden. In einem solchen Arbeitszyklus sind also sämtliche Aufgaben und Belastungen des Industrieroboters erfasst. Die Verschleißabschätzung für die betreffenden Achsen eines Roboterarmes sind dementsprechend genau.

Die Analyse des Drehmomentenverlaufs auf Drehmomentenverlaufsabschnitte, die ein zuvor festgelegtes Drehmomentenband verlassen, sowie die Bewertung der Häufigkeit und/oder des Kurvenverlaufs der Drehmomentenverlaufsabschnitte, erfolgt erfindungsgemäß automatisiert. Somit entfällt die seither notwendige Interpretation durch darauf spezialisierte Betriebs- oder Servicemitarbeiter vollständig. Auf diese Weise kann die betrachtete Datenmenge für den Drehmomentenverlauf gesteigert werden und die Genauigkeit der Verschleißermittlung erhöht sich. Insgesamt ist das erfindungsgemäße Verfahren somit schneller und genauer als die seither bekannten.

Eine vorteilhafte Weiterbildung des erfindungsgemäßen Verfahren ist dadurch gekennzeichnet, dass das Verhältnis von einem maximalen Drehmomentenwert zu einem gemittelten Drehmomentenwert in einem zuvor definierten Zeitraum innerhalb des betrachtenden Arbeitszyklus für die Bewertung des Achsverschleißes herangezogen wird.

Bei der Analyse des Drehmomentenverlaufes werden insbesondere einzelne Drehmomentenverlaufsabschnitte analysiert, die einen maximalen Drehmoment aufweisen, wobei der Drehsinn des Drehmoments unerheblich ist. Die genannten Drehmomentsverlaufsabschnitte werden dahingehend festgelegt, ob sie ein Maximum aufweisen, das über ein zuvor gelegtes Drehmomentenband hinaus geht, so dass eine im Vergleich zum Drehmomentenband überhöhte Drehmomentbelastung aufgetreten ist. Diese maximalen oder extremen Drehmomentwerte sind für einen erhöhten Verschleiß der Achsen mitverantwortlich und werden dementsprechend bei der Bewertung berücksichtigt. Das eingangs genannte Verhältnis von maximalen Drehmomentenworten zu gemittelten Werten kann näher einen Gewichtsfaktor, der empirisch ermittelt wird, angepasst werden.

Eine weitere Ausgestaltung des erfindungsgemäßen Verfahrens ist dadurch gekennzeichnet, dass wenigstens ein Kurvenverlauf, insbesondere die Steigung der Kurve unmittelbar zeitlich vor und gegebenenfalls nach einem Extremum von diesem ausgehend bis wenigstens zu den nächst folgenden Wendepunkt der Drehmomentenkurve, eines Drehmomentenverlaufsabschnittes für die Bewertung des Achsverschleißes herangezogen wird.

Für die Bewertung bedeutet dies, dass insbesondere steil ansteigende oder steil abfallende Drehmomentenverläufe zu einer anderen für die Bewertung des Achsverschleißes führen, als beispielsweise flacher verlaufende Kurvenverläufe. Dies ist zum Beispiel durch unterschiedliche Bewertungsfaktoren, die in die Bewertungsformel eingehen, zu berücksichtigen.

Die gestellte Aufgabe wird auch gelöst durch ein System zur Verschleißermittlung von Achsen eines Roboterarmes eines Industrieroboters mit einem Datenmodul, welches die Daten eines Drehmomentenverlaufs an wenigstens einer Achse während wenigstens eines Arbeitszyklus des Industrieroboters enthält, mit einem Analysemodul, mit welchem Drehmomentverlaufsabschnitte des Drehmomentenverlaufes, die ein zuvor festgelegtes Drehmomentenband verlassen, auswählbar sind und mit einem Bewertungsmodul, durch welches die Häufigkeit und/oder der Kurvenverlauf der Drehmomentenverlaufsabschnitte als Achsverschleiß interpretierbar sind, wobei zwischen dem Datenmodul, dem Analysemodul und dem Bewertungsmodul ein Datenaustausch ermöglicht ist.

Im wesentlichen weist das System zur Verschleißermittlung von Achsen eines Roboterarmes drei verschiedene Funktionsmodule auf. Das als Datenmodul bezeichnete Funktionsmodul enthält die Daten des zu betrachtenden Dretmomentenverlaufs oder der zu betrachtenden Drehmomentenverläufe, für den Fall, dass mehrere Achsen betrachtet werden. Im Analysemodul sind bestimmte Daten, die vom Datenmodul bereit gestellt werden, in der angegebenen Weise auswählbar. Insbesondere sind für die im Bewertungsmodul dann abzuschätzenden Achsverschleiße diejenigen Drehmomentverlaufsabschnitte heranzuziehen, die ein zuvor festgelegtes Drehmomentenband verlassen, also vergleichsweise hohe Drehmomentenwerte aufweisen. Dabei wird das Drehmomentenband in der Regel so definiert, dass die Grenzen des Bandes der zulässigen Achsbelastung der jeweiligen Achse entsprechen, die beispielsweise mit den grenzwertigen Belastungsangaben des Roboterherstellers zusammenfallen oder mit sonstigen empirisch festgestellten Grenzwerten angenommen werden.

Das erfindungsgemäße System zur Verschleißermittlung benötigt in einer vorteilhaten Grundvariante keine zusätzlichen Messwertaufnehmer oder sonstige Messvorrichtungen, die nicht schon am Roboter vorhanden wären. Somit ist der Aufbau vergleichsweise einfach sowie aufgrund der Automatisierung des Systems betreffend dem Handling der Daten, der Analyse sowie der Bewertung der Daten, auch die Verschleißabschätzung besonders schnell und vergleichsweise genau durchführbar. In der vorstehend beschriebenen Grundvariante werden die benötigten Daten einer Robotersteuerung entnommen.

Eine Fortbildung des erfindungsgemäßen Systems ist dadurch gekennzeichnet, dass wenigstens eines der Module in einer Robotersteuerung angeordnet ist.

Hierdurch ist der materielle Aufwand zusätzlich vereinfacht. Die Robotersteuerung ist nämlich ein übliches Teil eines Robotersystems, so dass die Implementierung des oder der Module in die Robotersteuerung ein besonders kompaktes System entstehen lässt.

Es ist aber auch ohne weiteres möglich, dass einzelne Module oder auch sämtliche Module in ein Auswertegerät, insbesondere einen Messcomputer, integriert sind.

Hierdurch wird der Vorteil erreicht, dass das erfindungsgemäße System mobil wird und für den Einsatz nacheinander an mehreren Industrierobotern geeignet ist.

Des weiteren ist es für das erfindungsgemäße System unerheblich, ob der Drehmomentenverlauf aus der Robotersteuerung als direkte oder indirekte Werte auslesbar ist.

Beim Auslesen direkter Werte des Drehmomentenverlaufs aus der Robotersteuerung sind die gerade aktuellen oder auch irgendwelche gespeicherten Drehmomentwerte als Drehmomentwerte abrufbar. Das erfindungsgemäße System kann in diesem Fall ohne weitere Datenaufbereitung einen Drehmomentenwert oder Drehmomentenwerte erkennen. Als indirekte Werte sollen solche Werte bezeichnet sein, die entweder als unskalierter Spannungswert von der Robotersteuerung zur Verfügung stehen oder als analoges Spannungs- oder sonstiger Signal zur Verfügung gestellt sind und als Drehmomentenwert zunächst noch interpretiert beziehungsweise umgerechnet werden müssen. Dazu kann ein Analog-Digitalwandler oder ein sonstiges Transfermodul dem erfindungsgemäßen System vorgeschaltet sein.

In einer vorteilhaften Ausgestaltung des erfindungsgemäßen Systems sind die Module jeweils als Computerprogrammprodukte ausgestaltet.

Weitere vorteilhafte Ausgestaltungen des Erfindungsgegenstandes sind den weiteren abhängigen Ansprüchen zu entnehmen.

Anhand von den in den Zeichnungen angegebenen Ausführungsbeispielen sollen die Erfindung, ihre Vorteile sowie weitere Verbesserungen näher erläutert und beschrieben werden.

Es zeigen:
- Fig. 1: ein Beispiel für eine Anschlussmöglichkeit eines erfindungsgemäßen Systems an eine Robotersteuerung,
- Fig. 2: einen erfindungsgemäßen Systemaufbau und
- Fig. 3: die Darstellung von Drehmomentverläufen verschiedener Achsen.

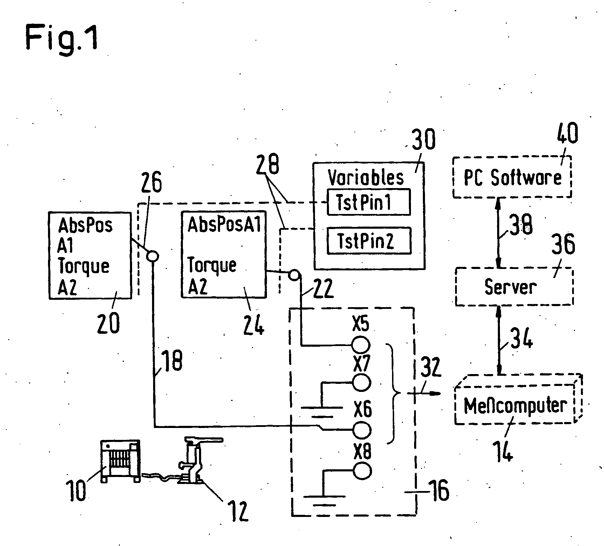

Fig. 1 zeigt das Beispiel einer Anschlussmöglichkeit zwischen einer Robotersteuerung 10, der einen Roboter 12 steuert, und einem System zur Verschleißabschätzung 14. Eine Schnittstelle 16 zwischen der Robotersteuerung 10 und dem ersten System 14 ist mit einem gestrichelten Rahmen umrandet und umfasst eine Anzahl von Schnittstellenpunkten, die mit X5, X6, X7 sowie X8 bezeichnet sind. Die Schnittstelle 16 ist dabei für das Abgreifen von zweier Signale einer Roboterachse vorgesehen, wobei es ohne weiteres denkbar, dass eine Vielzahl von Signalen verschiedener Achsen über die Schnittstelle 16 abgefragt oder entnommen werden.

Im gewählten Beispiel ist die Seite der Schnittstelle 16, auf der sich der Roboter 12 sowie dessen Steuerung 10 befindet, durch die Darstellung der Symbole für den Roboter 12 und dessen Robotersteuerung 10 dargestellt. Auf dieser Seite der Schnittstelle 16 verbindet den Anschlusspunkt X6 eine erste Datenleitung 18 mit einem ersten Datenauswahlschalter 20 der Robotersteuerung 10. In vergleichbarer Weise ist der Anschlusspunkt X5 mit einer zweiten Datenleitung 22 mit einem zweiten Datenauswahlschalter 24 verbunden. Über ein Schaltelement 26 kann die erste Datenleitung 18 entweder mit einem Signal einer absoluten Position 11 der Roboterachse oder einem Drehmomentensignal A2 der Roboterachse beschaltet werden. Im gewählten Beispiel verbindet das Schaltelement 26 die Datenleitung 18 mit dem Signal A1 der absoluten Position der Roboterachse.

Im Unterschied dazu, ist die zweite Datenleitung 22 mit dem Drehmornentensignal A2 für die Roboterachse des Roboters 12 verbunden. Die Anschlusspunkte X7 bis X8, die dem Signalpunkt X5 beziehungsweise X6 zugeordnet sind, sind auf Erde/Masse gelegt.

Das gewählte Beispiel zeigt also die Beschaltung der Schnittstelle 16 mit Daten aus der Robotersteuer 10, die lediglich eine Achse betreffen. Es ist ohne weiteres denkbar, dass die Daten mehrerer oder aller Achsen des Roboters 12 auf eine entsprechende Schnittstelle aufgelegt werden, und dass noch weitere Signale über die Schnittstelle 16 abmessbar sind. Der Vorteil dieser Beschaltung ist es, dass jedem Drehmomentenwert eine absolute Position der Achse, zuordenbar ist, so dass einer Analyse der Drehmomentenwerte auch die absolute Position der Achse berücksichtigt werden kann, zum Beispiel zur Differenzierung ob ein hoher Drehmomentenwert aufgrund einer hohen Last am Roboterarm oder aufgrund einer extremen Position der Roboterachse entstanden ist.

Zu Testzwecken, ob die zur Verfügung gestellten Signale auch fehlerfrei an die Schnittstelle 16 übermittelt werden, sind der erste 20 sowie der zweite Datenauswahlschalter 24 jeweils mit einer Testvorrichtung 30 mittels dritter Datenleitungen 28 verbunden.

Die Schnittstelle 16 ist außerdem noch mit dem System zur Verschleißabschätzung 14, hier dem Messcomputer 14, verbunden, welche Verbindung durch einen ersten Pfeil 32 angedeutet ist. Zudem ist der Messcomputer 14 durch eine vierte Datenleitung 34 mit einem Server 36 sowie dieser mit einer fünften Datenleitung 38 mit einem PC 40 verbunden. Im dargestellten Beispiel hat der Messcomputer 14 die Aufgabe, die an der Schnittstelle 16 analog zur Verfügung gestellten Spannungswerte der Roboterachse als Werte für einen Drehmomentenverlauf zu interpretieren. Die durch den Messcomputer 14 entsprechend umgewandelten Werte für den Drehmomentenverlauf werden durch die vierte Datenleitung 34, den Server 36 über die fünfte Datenleitung 38 zu einer Datenverarbeitungsvorrichtung 40 übermittelt.

Mit der in dieser Figur dargestellten Anordnung läuft das erfindungsgemäße Verfahren wie folgt ab.

Von der Robotersteuerung 10 werden am Anschlusspunkt X6 über die erste Datenleitung 18 Datensignale A1 zur Verfügung gestellt, die als absolute Position der Achse zu bewerten sind. In vergleichbarer Weise werden von der Robotersteuerung 10 über die zweite Datenleitung 22 Werte A2 für das gerade aufgebrachte Drehmoment an der Achse des Roboters 12 übermittelt. Beide Werte A1, A2 werden zusammen mit einem Zeitsignal vom Messcomputer 14 erfasst und zunächst gespeichert. Der Signalwert A1 für die absolute Position der ersten Achse des Roboters 12 ist für das erfindungsgemäße Verfahren nicht zwingend erforderlich, vereinfacht jedoch für zweckmäßige Ausgestaltung des erfindungsgemäßen Verfahrens die Interpretation der Messwerte A2 für das Drehmoment.

Ebenso wenig ist es erforderlich, dass der Messcomputer 14 die empfangenen Daten speichert. Diese könnten auch sofort, also online, weiterverarbeitet und zur Darstellung der Ergebnisse an den PC 40 übertragen werden. Aber auch hier ist es zweckmäßig, die erhaltenen Messwerte A1, A2 Zeitwert zu Vergleichszwecken oder für spätere Vergleichsrechnungen zunächst zu speichern, um so auch eine Kopie der Originaldaten zur Verfügung zu haben.

Auf diese Weise wird der gesamte Drehmomentenverlauf eines kompletten Arbeitszyklus des Roboters 12 an den PC 40 übermittelt. Auch dieser speichert zunächst den empfangenen Drehmomentenverlauf der Roboterachse ab. Im gewählten Beispiel soll der Arbeitszyklus des Roboters 12 im ersten Schritt aus dem Anfahren und Greifen eines Werkstückes bestehen. Der zweite Arbeitsschritt ist als das Anheben des Werkstücks mit anschließendem Verbringen desselben an eine Endposition für das Werkstück definiert. Schließlich besteht der dritte Arbeitsschritt für den Roboter 12 darin, das Werkstück loszulassen und den Roboterarm wieder in seine Ausgangsposition zu bewegen, so dass der nunmehr beendete Arbeitszyklus wiederholbar ist.

Der durch die Arbeitsschnitte definierte Arbeitszyklus wird zunächst als Drehmomentenverlauf auf der Anzeigevorrichtung des PCs 40 dargestellt. Jeder Drehmomentenverlaufsabschnitt, der ein zuvor festgelegtes Drehmomentenband, also zulässige Minimum- und Maximumwerte für das Drehmomentband dieser Achse verlassen, werden als solche definiert und analysiert sowie in einem anschließenden Verfahrensschritt einer Bewertung unterzogen.

In einem einfachen Bewertungsschritt werden dabei lediglich die Häufigkeit des Verlassens des Drehmomentenbandes innerhalb eines bestimmten Zeitabschnittes, vorgegeben durch den Arbeitszyklus, als Maßstab für die Bewertung herangezogen.

Eine andere Möglichkeit besteht darin, dass der Kurvenverlauf in einem analysierten Drehmomentenverlaufsabschnitt für die Bewertung herangezogen wird. Insgesamt wird aus der Häufigkeit und/oder des Kurvenverlaufs der Drehmomentenverlaufsabschnitte, gegebenenfalls zusätzlich mit einem empirisch ermittelten Faktor versehen, der aktuelle Achsverschleiß aufgrund eines solchen Arbeitszyklus abgeschätzt. Der einfachste mit dem erfindungsgemäßen Verfahren ermittelbaren Achsverschleiß ist also ein Achsverschleiß je Arbeitszyklus. Mit der Kenntnis aus den historischen Betriebsdaten des Roboters 12 der bisher vollbrachten Arbeitszyklusse des Roboters 12, wird erfindungsgemäß dann auch der aktuelle Verschleißzustand des Roboters 12 beziehungsweise der betreffenden Achse oder Achsen ermittelt. Aufgrund dieser Abschätzung wird dann zudem noch eine Aussage ermöglicht, die sich auf den Zeitraum bezieht, mit dem diese Roboterachse noch bei dem momentanen definierten Arbeitszyklus betrieben werden kann. Zusätzlich können Empfehlungen berechnet werden, wie die Belastung der Roboterachse in einen Arbeitszyklus verringert werden kann und derart auch der Verschleiß. Hierzu wird auch das Positionssignal 11 herangezogen.

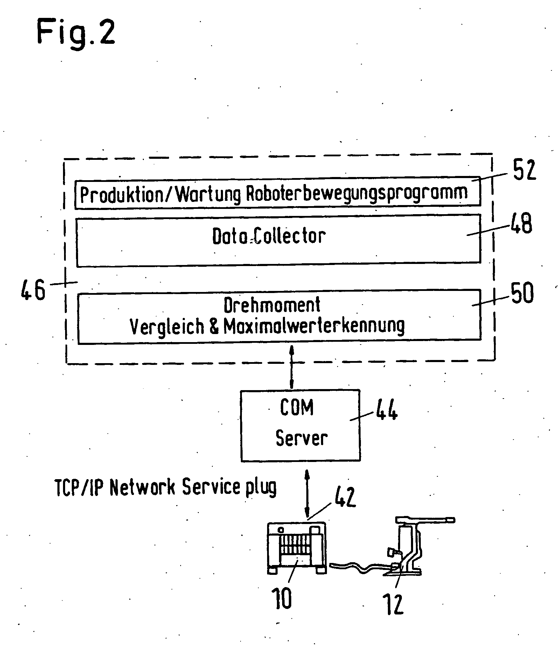

Figur 2 zeigt das Beispiel eines Datenflusses von der Robotersteuerung 10 des Roboters 12 über eine TCP/IP-Schnittstelle 42, durch welche die Daten von der Robotersteuerung 10 an ein TCP/IP-Server mit Netzwerk 44 einspeisbar sind. Das TCP/IP-Netzwerk 44 verbindet also ein Auswertegerät 46 mit der Robotersteuerung 10. Dieses Beispiel zeigt, dass das Auswertegerät 46 erfindungsgemäß von der Robotersteuerung 10 mittels des Netzwerkes 44 verbunden sein kann. Im gewählten Beispiel ist das ein standardisiertes TCP/IP-Netzwerk. Es ist aber ebenso gut denkbar, dass die Schnittstelle 42 in andere Netzwerke einbindet, beispielsweise dass die Schnittstelle 42 eine Internetschnittstelle ist, so dass das Netzwerk 44 durch das Internet gebildet ist, und das Auswertegerät 46 somit ohne lokale Beschränkung irgendwo auf der Welt angeordnet ist.

Im Beispiel ist das erfindungsgemäße System zur Verschleißabschätzung von Achsen eines Roboterarmes eines Industrieroboters mit allen seinen Modulen im Auswertegerät 46 verwirklicht. Der Drehmomentenverlauf wird demgemäss von der Schnittstelle 42 über das Netzwerk 44, in Form der von der Robotersteuerung 10 zur Verfügung gestellten Daten, zum Auswertegerät 46 geleitet. Dort werden die erhaltenen Daten zunächst von einem Datensammler 48 empfangen und als Drehmomentdaten oder sonstige Daten, insbesondere auch in ihren zeitlichem Ablauf, festgehalten und gegebenenfalls gespeichert. Auf diese Weise ist es einem Bearbeitungsmodul 50 möglich, die vom Datensammler 48 zur Verfügung gestellten Daten als Drehmomente für einen Drehmomentenvergleich, für die Maxiamlwerterkennung und für die Darstellung der Daten als Kurven, zu interpretieren.

In einem weiteren Modul, einem Bewertungsmodul 52, wird die Kurve, der Kurvenverlauf oder bestimmte Aspekte der Kurve als Verschleiß bewertet, so dass am Ende des erfindungsgemäßen Verfahrens eine Aussage darüber getroffen ist, inwieweit eine bestimmte Achse des Roboters 12 besonderen, abnormen Belastungen oder Überschreitungen bestimmter zulässiger Belastungen ausgesetzt ist oder war, und derart ein entsprechender Verschleißzustand besteht. Diese Daten mit anderen Daten der Produktion, der Wartung oder des Roboterbewegungsprogramms, wie in dieser Figur im Bewegungsmodul 52 angedeutet, verbessern insgesamt die Qualität der Aussage betreffend der Verschleißabschätzung beziehungsweise des Zustandes der einzelnen Achsen.

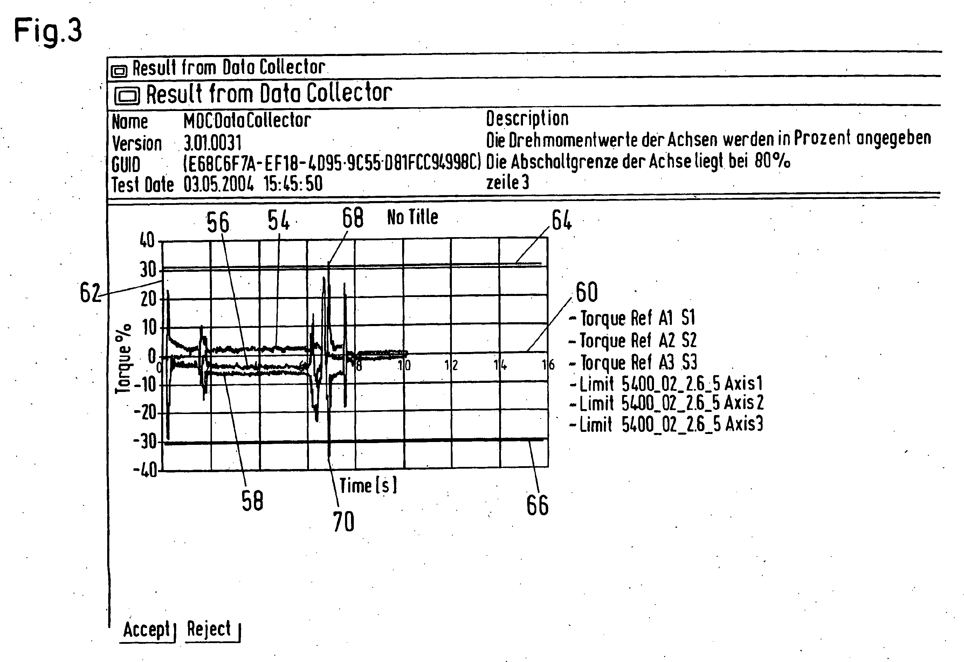

Fig. 3 zeigt die Darstellung von Drehmomentverläufen von drei unterschiedlichen Roboterachsen. Dabei sind ein erster 54, ein zweiter 56 sowie ein dritter Drehmomentenverlauf 58 auf einer Zeitachse 60, die den zeitlichen Verlauf der Drehmomentensignale in Sekunden angibt, dargestellt. Die Ordinatenachse des Graphs ist als Drehmomentenachse 62, normiert auf einen Maximalwert, der einer Prozentbelastung von 100% entspricht, derart aufgetragen, dass die unterschiedlichen Achsen des Roboters 12 auch vergleichbar in einem Graph dargestellt werden können. Üblicherweise sind die unterschiedlichen Achsen des Roboters 12 nach ihrer Bauart, ihrem Antrieb, ihrer Leistung, ihrem Getriebe und so weiter völlig unterschiedlich konzipiert, so dass ein Auftrag in absoluten Werten zwar möglich, aber sehr unübersichtlich wäre und jedenfalls zu einer ungünstigen Darstellung führen würde. In den Graphen sind noch ein oberer Grenzwert 64 sowie ein unterer Grenzwert 66 eingetragen, wobei die Grenzwerte 64, 66 jeweils bei etwa 30%, also einerseits plus 30% andererseits minus 30%, ein Drehmomentenband beschreiben, welches auch als Normalband bezeichnet, wird. Kein besonderer Verschleiß an den Roboterachsen ist also zu erwarten, wenn der Drehmomentenverlauf innerhalb des beschriebenen Bandes verbleibt.

Für zwei 56, 58 der drei Drehmomentenverläufe 54, 56, 58 ist dies auch durchgehend der Fall. Der erste Drehmomentenverlauf 54 weist jedoch eine erste Stelle 68 sowie eine zweite Stelle 70 auf, an denen das Band verlassen wird. Für die Verschleißabschätzung von Achsen sind diese Stellen besonders interessant. Die Bewertung eines aktuellen Achsverschleißes kann dabei anhand von verschiedenen Kriterien vorgenommen werden.

Eine Möglichkeit besteht dabei darin, dass die Anzahl derjenigen Stellen, wie die Stellen 68, 70; gezählt werden, die das Normalband verlassen. Die auftretende Häufigkeit dieser Ereignisse ist dabei ein Maß für den Verschleiß der betreffenden Achse.

Eine weitere Möglichkeit besteht darin, dass das auftretende maximale Drehmoment zu einem aktuellen Drehmoment unter Einbindung von achsspezifischen Parametern, also empirischen Größen als Bewertungsmaßstab herangezogen wird. Dabei ist als aktuelles Drehmoment insbesondere ein Mittelwert aus Drehmomentwerten anzusehen, der als arithmetrischer Mittelwert über den gesamten Messzeitraum des Arbeitszyklusses angesehen werden kann, oder ein selektiver Mittelwert, der sich aus der Ruhebelastung, also einer Belastung der Roboterachse im Grundzustand des Roboters ohne Arbeitsaufgabe, ergibt.

Eine weitere Möglichkeit der Bewertung besteht darin, die Anzahl der gegenläufigen Maximalwerte beim Anfahren einer Koordinate innerhalb eines Arbeitszyklus als Bewertungsmaßstab für die Verschleißabschätzung heranzuziehen. Noch eine Möglichkeit besteht darin, einen Trehdvergleich der Werte der Reibung einer Krafteinheit, also insbesondere Motor, Getriebe und Roboterarm, innerhalb einer Bewegung von einer Koordinate innerhalb des Arbeitszyklus des Roboters zu einer zweiten Koordinate; zu betrachten. Hierfür sind jedoch noch weitere, hier nicht näher beschriebene Werte und Daten aus der Robotersteuerung mit zu betrachten. Die einzelnen zu betrachtenden Werte sind dem Fachmann jedoch geläufig.

### Bezugszeichenliste

- 10: Robotersteuerung
- 12: Roboter
- 14: System zur Verschleißabschätzung
- 16: Schnittstelle
- 18: erste Datenleitung
- 20: erster Datenauswahlschalter
- 22: zweite Datenleitung
- 24: zweiter Datenauswahlschalter
- 26: Schaltelement
- 28: dritte Datenleitung
- 30: Testvorrichtung
- 32: Pfeil
- 34: vierte Datenleitung
- 36: Surfer
- 38: fünfte Datenleitung
- 40: Datenverarbeitungsvorrichtung
- 42: TCP/IP-Schnittstelle
- 44: TCP/IP-Netzwerk
- 46: Auswertegerät
- 48: Datensammler
- 50: Bearbeitungsmodul
- 52: Bewertungsmodul
- 54: erster Drehmomentenverlauf
- 56: zweiter Drehmomentenverlauf
- 58: dritter Drehmomentenverlauf
- 60: Zeitachse
- 62: Drehmomentenachse
- 64: oberer Grenzwert
- 66: unterer Grenzwert
- 68: erste Stelle
- 70: zweite Stelle

## Patentansprüche

1. Verfahren zur Verschleißermittlung von Achsen eines Roboterarmes eines Industrieroboters, wobei ein Drehmomentenverlauf (54, 56, 58) an wenigstens einer Achse während wenigstens eines Arbeitszyklus des Industrieroboters einer Analyse zu Grund gelegt wird, wobei der Drehmomentenverlauf (54, 56, 58) auf Drehmomentenverlaufsabschnitte, die ein zuvor festgelegtes Drehmomentenband verlassen, analysiert wird, und wobei durch Bewertung der Häufigkeit und / oder des Kurvenverlaufs der Drehmomentenverlaufsabschnitte ein aktueller Achsverschleiß ermittelt wird.

2. Verfahren nach Anspruch 1, **dadurch gekennzeichnet, dass** der Drehmomentenverlauf(54, 56, 58) gemessen oder aus einem Datenspeicher ausgelesen wird.

3. Verfahren nach Anspruch 1 oder 2, **dadurch gekennzeichnet, dass** das Verhältnis von einem maximalen Drehmomentenwert in einem bestimmten Drehmomentenverlaufsabschnitt zu einem gemittelten Drehmomentenwert in einem zuvor definierten Zeitraum innerhalb des betrachteten Arbeitszyklus für die Bewertung des Achsverschleißes herangezogen wird.

4. Verfahren nach seinem der vorgenannten Ansprüche, **dadurch gekennzeichnet, dass** wenigstens ein Kurvenverlauf, insbesondere die Steigung der Kurve unmittelbar zeitlich vor und gegebenenfalls nach einem Extremum von diesem ausgehend bis wenigstens zu dem nächstfolgenden Wendepunkt der Drehmomentenkurve, eines Drehmomentenverlaufsabschnittes für die Bewertung des Achsverschleißes herangezogen wird.

5. Verfahren nach einem der vorgenannten Ansprüche, **dadurch gekennzeichnet, dass** achsspezifische Parameter, insbesondere die Motorenbauart eines Antriebsmotors einer Achse, die Motorengröße eines Antriebsmotors einer Achse, das Getriebe einer Achse, als für die Bewertung des Achsverschleißes herangezogen wird.

6. Verfahren nach Anspruch 5, **dadurch gekennzeichnet, dass** der achsspezifische Parameter empirisch oder mit einem neuronalen Verfahren ermittelt wird.

7. Verfahren nach einem der vorgenannten Ansprüche, **dadurch gekennzeichnet, dass** die Drehmomentverläufe oder / und das Drehmomentband auf einer Anzeigevorrichtung dargestellt werden.

8. Verfahren nach einem der vorgenannten Ansprüche, **dadurch gekennzeichnet, dass** unter Berücksichtigung des aktuellen Achsverschleißes zusammen der bisherigen Anzahl der Arbeitszyklen ein absoluter Achsverschleiß oder Achszustand abgeschätzt wird.

9. Verfahren nach einem der vorgenannten Ansprüche, **dadurch gekennzeichnet, dass** unter Berücksichtigung des aktuellen Achsverschleißes und / oder der bisherigen Anzahl der Arbeitszyklen ein Zeitraum bis zum Erreichen der Verschleißgrenze für eine Roboterachse abgeschätzt wird

10. System zur Verschleißermittlung (14) von Achsen eines Roboterarmes eines Industrieroboters mit einem Datenmodul, welches die Daten eines Drehmomentenverlaufes (54, 56, 58) an wenigstens einer Achse während wenigstens eines Arbeitszyklus des Industrieroboters enthält, mit einem Analysemodul, mit welchem Drehmomentenverlaufsabschnitte des Drehmömentenverlaufes (54, 56, 58), die ein zuvor festgelegtes Drehmomentenband verlassen, auswählbar sind und mit einem Bewertungsmodul (52), durch welches die Häufigkeit und / oder der Kurvenverlauf der Drehmomentverlaufsabschnitte als Achsverschleiß ermittelbar sind, wobei zwischen dem Datenmodul, dem Analysemodul und dem Bewertungsmodul (52) ein Datenaustausch ermöglicht ist.

11. System nach Anspruch 10, **dadurch gekennzeichnet, dass** wenigstens eines der Module, nämlich das Datenmodul, das Analysemodul oder das Bewertungsmodul (52), in einer Robotersteuerung (10) angeordnet ist.

12. System nach Anspruch 10 oder 11, **dadurch gekennzeichnet, dass** wenigstens eines der Module, nämlich das Datenmodul, das Analysemodul oder das Bewertungsmodul (52), in einem Auswertegerät (46) angeordnet ist, wobei das Auswertgerät gegebenenfalls mit der Robotersteuerung (10) verbunden ist.

13. System nach einem der vorgenannten Ansprüche.10 bis 12, **dadurch gekennzeichnet, dass** der Drehmomentenverlauf (54, 56, 58) aus der Robotersteuerung (10) als direkte oder indirekte Werte auslesbar sind.

14. Computerprogrammprodukt mit Programmcode-Mitteln zur Durchführung aller Schritte vom Anspruch 1, wenn das Computerprogrammprodukt durch ein System nach einem der Ansprüche 10 bis 13 ausgeführt wird.

## Claims

1. Method for appraising the wear of axes of a robot arm of an industrial robot, a torque profile (54, 56, 58) at at least one axis during at least one working cycle of the industrial robot being taken as a basis for an analysis, the torque profile (54, 56, 58) being analyzed for portions of the torque profile that leave a previously fixed torque band, and current axial wear being determined by assessing the frequency and/or the curve profile of the portions of the torque profile.

2. Method according to Claim 1, **characterized in that** the torque profile (54, 56, 58) is measured or read out from a data memory.

3. Method according to Claim 1 or 2, **characterized in that** the ratio of a maximum torque value in a specific portion of the torque profile to an averaged torque value in a previously defined time period within the working cycle considered is used for the assessment of the axial wear.

4. Method according to one of the preceding claims, **characterized in that** at least one curve profile, in particular the slope of the curve at a time directly before and possibly after an extreme, taken from the latter up to at least the next-following point of inflection of the torque curve, of a portion of the torque profile is used for the assessment of the axial wear.

5. Method according to one of the preceding claims, **characterized in that** axis-specific parameters, in particular the type of motor of a drive motor of an axis, the size of motor of a drive motor of an axis, the transmission of an axis, are used for the assessment of the axial wear.

6. Method according to Claim 5, **characterized in that** the axis-specific parameter is determined empirically or by a neural method.

7. Method according to one of the preceding claims, **characterized in that** the torque profiles and/or the torque band are represented on a display device.

8. Method according to one of the preceding claims, **characterized in that** an absolute axial wear or axial state is appraised by taking into account the current axial wear together with the number of working cycles so far.

9. Method according to one of the preceding claims, **characterized in that** a time period until the wear limit for a robot axis is reached is estimated by taking into account the current axial wear and/or the number of working cycles so far.

10. System for determining the wear (14) of axes of a robot arm of an industrial robot, with a data module, which contains the data of a torque profile (54, 56, 58) at at least one axis during at least one working cycle of the industrial robot, with an analysis module, with which portions of the torque profile (54, 56, 58) that leave a previously fixed torque band can be selected, and with an assessment module (52), by which the frequency and/or the curve profile of the portions of the torque profile can be interpreted as axial wear, a data exchange between the data module, the analysis module and the assessment module (52) being made possible.

11. System according to Claim 10, **characterized in that** at least one of the modules, that is the data module, the analysis module or the assessment module (52), is arranged in a robot control (10).

12. System according to Claim 10 or 11, **characterized in that** at least one of the modules, that is the data module, the analysis module or the assessment module (52), is arranged in an evaluation device (46), the evaluation device possibly being connected to the robot control (10).

13. System according to one of the preceding Claims 10 to 12, **characterized in that** the torque profile (54, 56, 58) can be read out from the robot control (10) as direct or indirect values.

14. Computer program product with program coding means for carrying out all the steps of Claim 1 when the computer program product is run by a system according to one of Claims 10 to 13.

## Revendications

1. Procédé de détermination de l'usure des axes d'un bras de robot d'un robot industriel, dans lequel une caractéristique de couple (54, 56, 58) sur au moins un axe est fixée comme base d'une analyse couvrant au moins un cycle de fonctionnement du robot industriel, dans lequel on analyse la caractéristique de couple (54, 56, 58) sur des sections de la caractéristique de couple qui excluent une bande de couple préalablement définie, et dans lequel on détermine l'usure courante des axes en évaluant la fréquence et/ou la caractéristique de la courbe des sections de caractéristique de couple.

2. Procédé selon la revendication 1, **caractérisé en ce que** la caractéristique de couple (54, 56, 58) est mesurée ou lue depuis une mémoire de données.

3. Procédé selon la revendication 1 ou 2, **caractérisé en ce qu'**on utilise pour l'évaluation de l'usure des axes le rapport d'une valeur de couple maximale dans une section de caractéristique de couple donnée à une valeur de couple moyennée sur un intervalle de temps préalablement défini à l'intérieur du cycle de fonctionnement considéré.

4. Procédé selon l'une quelconque des revendications précédentes, **caractérisé en ce qu'**on utilise pour l'évaluation de l'usure des axes au moins une caractéristique de la courbe, notamment la pente de la courbe immédiatement avant, et éventuellement, après un extrémum allant de celui-ci jusqu'à au moins le point d'inflexion suivant de la courbe de couple, d'une section de la caractéristique de couple.

5. Procédé selon l'une quelconque des revendications précédentes, **caractérisé en ce qu'**on utilise pour l'évaluation de l'usure des axes des paramètres spécifiques des axes, notamment le type de moteur d'un moteur d'entraînement d'un axe, la taille du moteur d'un moteur d'entraînement d'un axe, la transmission d'un axe.

6. Procédé selon la revendication 5, **caractérisé en ce que** le paramètre spécifique de l'axe est déterminé de manière empirique ou par un procédé neuronal.

7. Procédé selon l'une quelconque des revendications précédentes, **caractérisé en ce que** les caractéristiques de couple et/ou la bande de couple sont affichées sur un dispositif d'affichage.

8. Procédé selon l'une quelconque des revendications précédentes, **caractérisé en ce qu'**on estime une usure absolue des axes ou un état absolu des axes en tenant compte de l'usure courante des axes en association avec le nombre précédent des cycles de fonctionnement.

9. Procédé selon l'une quelconque des revendications précédentes, **caractérisé en ce qu'**on estime un intervalle de temps jusqu'à ce que la limite d'usure soit atteinte pour un axe de robot en tenant compte de l'usure courante des axes et/ou du nombre précédent des cycles de fonctionnement.

10. Système de détermination de l'usure (14) d'axes d'un bras de robot d'un robot industriel comportant un module de données qui contient les données d'une caractéristique de couple (54, 56, 58) sur au moins un axe pendant au moins un cycle de fonctionnement du robot industriel, comportant un module d'analyse au moyen duquel des sections de caractéristique de couple de la caractéristique de couple (54, 56, 58) qui excluent une bande de couple précédemment définie, peuvent être sélectionnées et comportant un module d'évaluation (52) au moyen duquel la fréquence et/ou la caractéristique de la courbe des sections de caractéristique de couple peuvent être déterminées en tant qu'usure des axes, dans lequel un échange de données est rendu possible entre le module de données, le module d'analyse et le module d'évaluation (52).

11. Système selon la revendication 10, **caractérisé en ce qu'**au moins l'un des modules, à savoir le module de données, le module d'analyse ou le module d'évaluation (52), est disposé dans une unité de commande de robot (10).

12. Système selon la revendication 10 ou 11, **caractérisé en ce qu'**au moins l'un des modules, à savoir le module de données, le module d'analyse ou le module d'évaluation (52), est disposé dans une unité d'évaluation (46), dans lequel le signal peut le cas échéant être relié à l'unité de commande de robot (10).

13. Système selon l'une quelconque des revendications 10 à 12 précédentes, **caractérisé en ce que** les caractéristiques de couple (54, 56, 58) de l'unité de commande de robot (10) peuvent être lues en tant que valeurs directes ou indirectes.

14. Produit de programme informatique comprenant des moyens à code de programme destinés à exécuter toutes les étapes de la revendication 1 lorsque ledit produit de programme informatique est exécuté par un système selon l'une quelconque des revendications 10 à 13.
